# DEMANDE DE BREVET EUROPEEN

(11) **EP 1 345 103 A1**
(43) Date de publication de la demande: **17.09.2003**
(21) Numéro de dépôt: 03290498.9
(22) Date de dépôt: 03.03.2003
(51) Int. Cl.: G05D 23/13

(54) **Mitigeur thermostatique à haut debit**

(30) Priorité: 05.03.2002 FR 0202813
(71) Demandeur: Ivar, 25080 Prevalle (IT); Somatherm, 24000 Perigueux (FR)
(72) Inventeur: Bertolotti, Paolo, S/G (IT); Arbo, Charles, 24750 Champcevinel (FR)
(74) Mandataire: Dronne, Guy

(57) **Abrégé**

L'invention concerne un mitigeur thermostatique permettant de fournir un fluide à une température régulée à partir d'un fluide froid et d'un fluide chaud. Il comprend un corps principal longitudinal, une entrée de fluide chaud, une entrée de fluide froid et une sortie, lesdites entrées étant formées par deux corps tubulaires débouchant dans ledit corps principal à travers deux orifices distincts. Les orifices (15, 17) s'étendent au-delà de la projection de la section droite (S1, S2) desdits corps tubulaires (12, 14) sur ledit corps principal (10) selon l'axe D desdits corps tubulaires (12, 14), et la jonction entre lesdits corps tubulaires (12, 14) et ledit corps principal (10) présente au moins une portion évasée (34), du corps tubulaire (12, 14) vers ledit corps principal (10), de façon à joindre le bord desdits orifices (15, 17) et à augmenter la section d'écoulement des fluides et/ou à diminuer les pertes de charges desdits fluides par quoi la pression dudit fluide régulé à ladite sortie (30) est augmentée.

## Description

La présente invention se rapporte à un mitigeur thermostatique permettant de fournir un fluide à une température régulée à partir d'un fluide froid et d'un fluide chaud.

Un domaine d'application envisagé est notamment, mais non exclusivement celui des installations de production d'eau chaude, dans lesquelles la température de l'eau régulée ne doit pas dépasser un certain seuil qui est défini par les normes en vigueur.

Des mitigeurs connus comprennent un corps principal longitudinal qui est généralement de symétrie cylindrique et ils présentent une sortie et deux entrées ; une première entrée pour le fluide chaud et une seconde entrée pour le fluide froid. Ces entrées sont formées de deux corps tubulaires de symétrie cylindrique débouchant sensiblement perpendiculairement dans ledit corps principal à travers deux orifices distincts correspondant à la projection d'une première portion de section droite desdits corps tubulaires sur ledit corps principal. Les axes des corps tubulaires sont généralement situés dans un même plan perpendiculaire au corps principal et une seconde portion de la section droite desdits corps tubulaires est obturée par la paroi dudit corps principal, car les deux orifices sont percés de part et d'autre dudit plan perpendiculaire de façon à pouvoir être obstrués, alternativement, par un manchon susceptible de coulisser dans ledit corps principal, en fonction de la température du fluide qui s'écoule de la sortie. Pour ce faire, le manchon est entraîné en translation par l'intermédiaire d'un organe déformable sous l'effet de la température. Ainsi, lorsque la température du mélange de fluide est inférieure à un certain seuil, l'organe déformable se contracte et ledit manchon tend à obstruer l'orifice correspondant à l'arrivée de fluide froid et à libérer celui qui correspond à l'arrivée de fluide chaud. Inversement, lorsque la température du mélange de fluide est supérieure à un autre seuil, l'organe déformable se dilate et ledit manchon tend à obstruer l'orifice correspondant à l'arrivée du fluide chaud et à libérer l'orifice correspondant à l'arrivée du fluide froid. Bien évidemment, le manchon est entraîné de façon continue en fonction de la température du mélange, laquelle est automatiquement régulée. En outre, les mitigeurs comprennent généralement des moyens de réglage permettant de modifier la position de l'organe déformable dans ledit corps principal, pour ajuster les seuils de température.

Compte tenu de leurs caractéristiques, les mitigeurs présentent l'inconvénient de faire chuter considérablement la pression des installations dans lesquelles ils sont installés. Le raccordement des conduites d'arrivée de fluide froid et chaud et de la conduite de sortie est généralement de dimension standard, notamment pour les installations de production d'eau chaude sanitaire. Il est possible d'augmenter le débit global des mitigeurs en augmentant leur dimension, mais d'une part la quantité de matière nécessaire à leur production serait plus importante et par conséquent leur coût en serait augmenté, et d'autre part, les outils nécessaires à la fabrication des différentes pièces qui les constituent, devraient être modifiés ou remplacés, ce qui grèverait encore plus le coût de production desdits mitigeurs.

Un problème qui se pose et que vise à résoudre la présente invention est alors de réaliser des mitigeurs qui non seulement permettent de limiter les pertes de charge et donc de maintenir la pression des installations dans lesquelles ils sont montés, mais aussi qui soient susceptibles d'être produits à un coût avantageux.

A cet effet, la présente invention propose un mitigeur thermostatique dont les orifices s'étendent au-delà de la projection de la section droite desdits corps tubulaires sur ledit corps principal selon l'axe desdits corps tubulaires, et dont la jonction entre lesdits corps tubulaires et ledit corps principal présente au moins une portion évasée ou excentrée, du corps tubulaire vers ledit corps principal, de façon à joindre le bord desdits orifices et à augmenter la section d'écoulement des fluides et/ou à diminuer les pertes de charges desdits fluides par quoi la pression dudit fluide régulé à ladite sortie est augmentée.

Ainsi, une caractéristique de l'invention réside dans les dimensions des orifices, lesquelles sont supérieures à celles des orifices des mitigeurs de l'art antérieur dont les dimensions correspondaient sensiblement à la projection d'une demi-section droite du corps tubulaire sur le corps principal, et dans les jonctions évasées entre lesdits corps tubulaires et le corps principal permettant de joindre le bord des orifices, lesquels s'étendent au-delà de la projection de la section droite desdits corps tubulaires sur ledit corps principal. De la sorte, la section d'écoulement des fluides dans le corps principal est augmentée et une plus grande partie des fluides traversant les corps tubulaires est susceptible de s'écouler dans le corps principal.

En outre, les modifications du mitigeur, objet de l'invention, portent essentiellement sur la forme des orifices et sur le mode de raccordement des corps tubulaires sur le corps principal qui ne nécessitent pas une grande quantité de matière supplémentaire, puisque les dimensions des corps tubulaires et du corps principal restent inchangées. Grâce à cette dernière caractéristique, le montage des mitigeurs objet de l'invention est susceptible d'être effectué de la même manière que les mitigeurs de l'art antérieur. De plus, les autres pièces du mitigeur ont des dimensions identiques à celles utilisées pour les mitigeurs de l'art antérieur, de sorte qu'il est susceptible d'être produit à un coût avantageux.

Selon un mode de mise en oeuvre de l'invention particulièrement avantageux, lesdits orifices et les portions évasées s'étendent sensiblement perpendiculairement audit corps principal de part et d'autre des corps tubulaires. Ainsi, les orifices sont élargis de façon symétrique par rapport aux corps tubulaires, perpendiculairement audit corps principal, ce qui permet, comme on l'expliquera plus en détail dans la suite de la description, le mélange des fluides dès qu'ils pénètrent dans le corps principal.

Avantageusement, la surface de ladite portion évasée forme une portion sensiblement cylindrique, l'axe dudit cylindre correspondant étant orienté sensiblement parallèlement audit corps principal. Cette caractéristique est avantageuse en ce que le mode de réalisation des orifices et des portions évasées en est facilité. En effet, le corps principal et les corps tubulaires sont réalisés d'une seule pièce par moulage ou par matriçage et la portion évasée de ladite jonction qui ne peut être moulée, compte tenu de la géométrie de la pièce est réalisée par un usinage axial. A cet effet, ladite portion de jonction évasée entre les corps tubulaires et le corps principal est tout d'abord moulée avec l'ensemble de la pièce et elle constitue une portion pleine déterminant la forme externe de la jonction. Ensuite, des moyens de fraisage de symétrie sensiblement cylindrique sont susceptibles d'être introduit axialement dans le corps principal, et d'être entraînés perpendiculairement à l'axe du corps principal pour ménager lesdites jonctions évasées et agrandir les orifices.

Selon un mode de réalisation particulièrement avantageux, lesdits deux orifices distincts sont situés de part et d'autre d'un plan perpendiculaire audit corps principal, les deux portions évasées des jonctions entre lesdits deux corps tubulaires et ledit corps principal étant respectivement situées de part et d'autre dudit plan perpendiculaire. Ainsi, selon cette caractéristique, un des orifices est susceptible d'être obstrué tandis que l'autre est libéré et inversement, au moyen d'une seule pièce coulissant longitudinalement dans le corps principal.

Préférentiellement, les deux corps tubulaires présentent un axe situé dans un même plan perpendiculaire audit corps principal de façon que le fluide froid et le fluide chaud soient mélangés ensemble dans l'espace dudit corps principal situé entre les deux corps tubulaires. De la sorte, il n'est nul besoin de prévoir un corps longitudinal extrêmement long, puisque l'énergie thermique du mélange de fluide tend à s'équilibrer dès l'écoulement des fluides chaud et froid dans le corps principal.

Selon un autre mode de réalisation de l'invention particulièrement avantageux, le mitigeur comprend un manchon disposé dans ledit corps principal et susceptible d'obstruer alternativement lesdits orifices en fonction de la dilatation thermique d'un organe sur lequel il s'appuie, et ledit organe est disposé dans ledit corps principal espacé dudit espace situé entre les deux corps tubulaires, pour que l'énergie thermique échangée entre les deux fluides puisse s'équilibrer. De la sorte, ledit organe se dilate sous l'action d'un mélange de fluide dont l'énergie thermique est uniformément répartie et qui correspond au fluide qui s'écoule de la sortie du corps principal.

De façon particulièrement avantageuse, ledit organe s'appuie directement sur ledit manchon de façon à l'entraîner en translation lorsqu'il se dilate pour qu'il obstrue ledit orifice correspondant à l'arrivée du fluide chaud, par quoi la vitesse de réaction dudit mitigeur est accrue lorsque la température du fluide qui s'écoule de ladite sortie est supérieure à un seuil déterminé. De la sorte, l'obstruction de l'orifice correspondant à l'arrivée de fluide chaud est réalisée sans retard par rapport à la dilatation dudit élément, contrairement à un mitigeur dont la dilatation de l'élément libérerait le manchon qui serait entraîné en translation par les moyens formant ressort.

Selon une caractéristique particulièrement avantageuse, les deux axes desdits deux corps tubulaires forment sensiblement un angle de 180° entre eux, lesdits fluides étant dirigés l'un vers l'autre. De la sorte, le mélange des deux fluides froid et chaud dans le corps principal est plus efficace.

Dans un autre mode de mise en oeuvre, les deux axes desdits deux corps tubulaires forment sensiblement un angle de 90° entre eux de façon à pouvoir adapter le mitigeur dans des installations pour lesquelles les deux arrivées de fluide sont perpendiculaires entre elles.

Préférentiellement, le mitigeur comprend des moyens de réglage permettant de régler la température du fluide régulé, constitués, comme on l'expliquera dans la suite de la description, de moyens de compression dudit organe apte à se dilater formés d'au moins un ressort et de moyens vissables.

Selon un second objet, la présente invention propose une installation comprenant un mitigeur thermostatique conforme à l'invention.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en coupe partielle longitudinale d'un mitigeur objet de l'invention ;
- la Figure 2, est une vue schématique en coupe transversale du mitigeur représenté sur la Figure 1 selon ll-ll ;
- la Figure 3 est une vue schématique en coupe transversale du mitigeur représenté sur la Figure 1 ;
- la Figure 4 est une vue schématique de dessus en élévation, d'un élément du mitigeur représenté sur la Figure 1 ;
- la Figure 5 est une vue de droite du mitigeur illustrée sur la Figure 1 représentant un détail ;
- la Figure 6 est une vue de gauche du mitigeur illustré sur la Figure 1 représentant un autre détail ;
- la Figure 7 est une vue schématique illustrant un détail du mitigeur représenté sur la Figure 1 ; et,
- la Figure 8 est une vue schématique de droite du détail illustré sur la Figure 7.

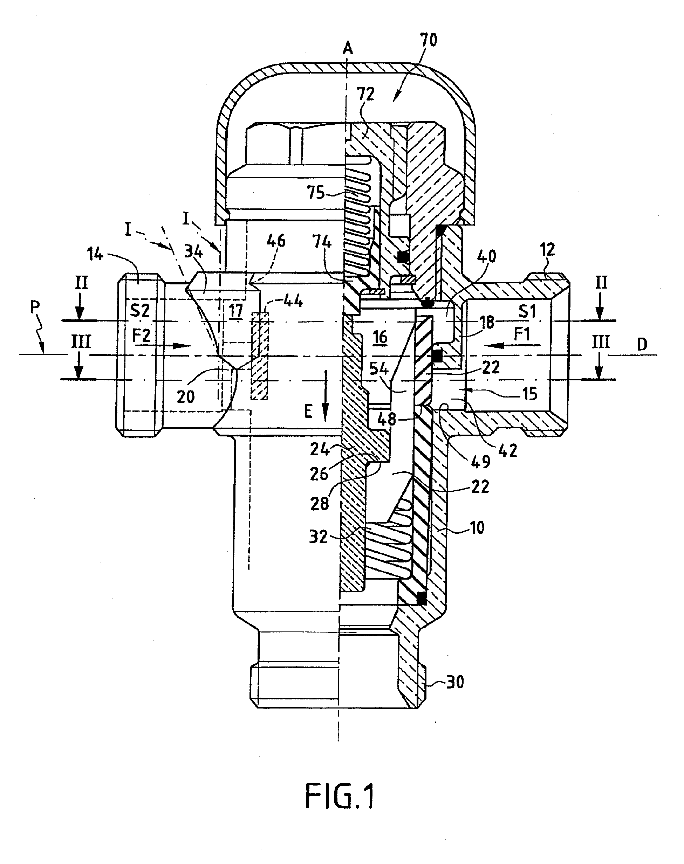

La Figure 1 illustre un mitigeur conforme à l'invention en coupe longitudinale sur la demi-partie droite et en vue externe sur la demi-partie gauche. Ce mitigeur est destiné à réguler le mélange d'eau froide et d'eau chaude dans une installation de production d'eau chaude.

On décrira tout d'abord les éléments constitutifs du mitigeur nécessaires à son fonctionnement, puis on décrira les éléments constitutifs essentiels de l'invention. Le mitigeur comprend un corps principal 10 longitudinal d'axe A et deux corps tubulaires 12 et 14 solidaires du corps principal 10 et débouchant à l'intérieur 16 à travers deux orifices 15 et 17. Le corps principal 10 présente une section circulaire de plus grande dimension que la section circulaire des corps tubulaires 12 et 14. Les deux corps tubulaires 12 et 14 sont solidaires du corps principal 10 et sont situés en regard l'un de l'autre de façon à présenter un axe commun D, coupant perpendiculairement l'axe A du corps principal 10.

Comme on l'expliquera plus en détail dans la suite de la description, de façon très avantageuse, le corps principal et les corps tubulaires sont moulés ensemble par matriçage, d'une seule pièce, dans un matériau tel que le laiton. Ce mode de réalisation permet d'améliorer sensiblement les propriétés mécaniques de la pièce obtenue par rapport à un moulage classique.

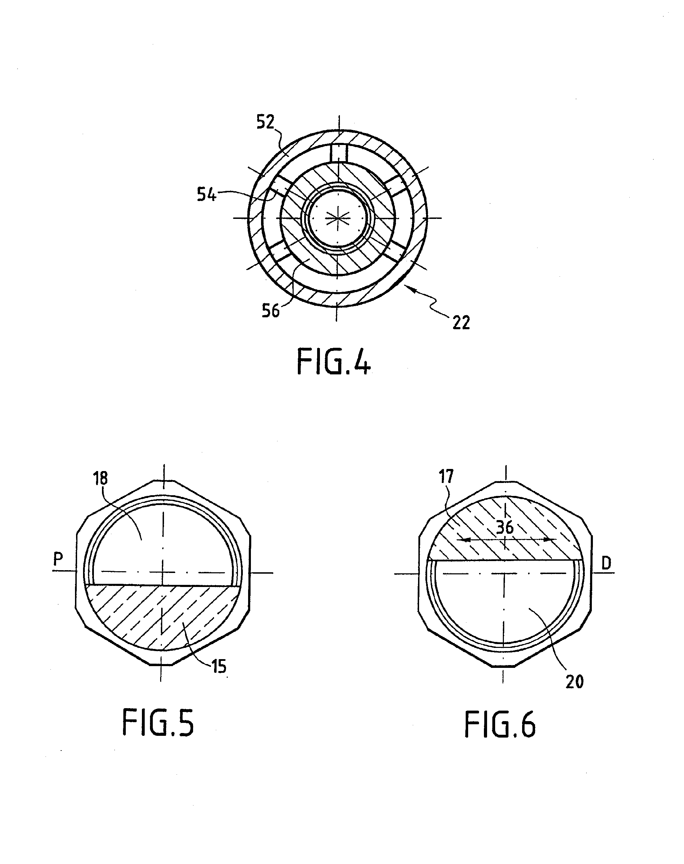

Le corps tubulaire 12 illustré à droite sur la Figure 1 correspond à l'arrivée d'eau chaude et celui de gauche 14, correspond à l'arrivée d'eau froide. Entre le corps principal 10 et les corps tubulaires, les orifices 15 et 16 permettant l'écoulement de l'eau provenant des flux F1 et F2 correspondant aux sections droites S1 et S2 des corps tubulaires 12 et 14, sont réduits par deux portions de disques respectivement 18 et 20, lesquelles forment cloisons et sont illustrées respectivement en vue de face sur les Figures 5 et 6. Les portions de disques 18 et 20 sont également solidaires du corps principal 10 et des corps tubulaires 12 et 14. En outre, elles sont essentiellement situées de part et d'autre d'un plan P perpendiculaire à l'axe A du corps principal et comprenant l'axe D commun aux corps tubulaires 12 et 14.

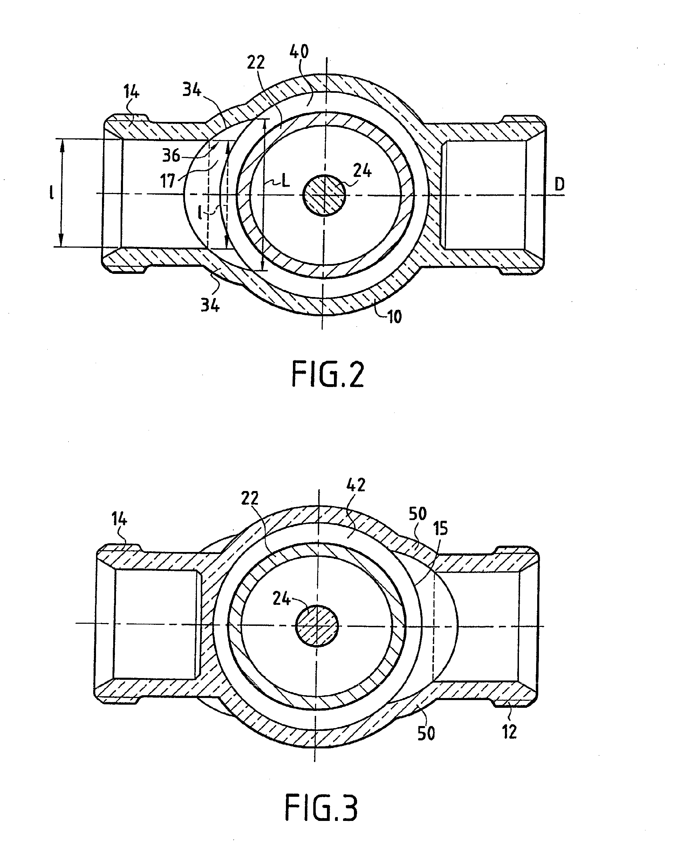

De la sorte, comme illustré sur la Figure 1, l'orifice 15 correspondant à l'arrivée d'eau chaude est situé au-dessous du plan perpendiculaire P et l'orifice 17 correspondant à l'arrivée d'eau froide est situé au-dessus du plan perpendiculaire P. Ainsi, grâce à un manchon 22 de symétrie cylindrique que l'on retrouve en détail, vu de dessus, sur la Figure 4 et en coupe avec l'ensemble du mitigeur sur les Figures 2 et 3, les débits d'eau froide et d'eau chaude sont susceptibles d'être modulés inversement l'un par rapport à l'autre pour fournir de l'eau à une température intermédiaire.

Pour ce faire, le manchon 22 qui se prolonge longitudinalement dans le corps principal est susceptible d'être entraîné en translation selon l'axe A par un organe 24 thermiquement déformable dont le volume augmente lorsqu'on lui fournit une énergie thermique. Ainsi que l'illustre la Figure 1, l'organe 24 présente un épaulement 26 en appui selon l'axe A contre des moyens 28 formant butée, du manchon 22. De la sorte, lorsque l'énergie thermique de l'eau qui circule dans le corps principal vers la sortie 30 selon E est grande elle tend à dilater l'organe 24 et à entraîner le manchon 22 dans le sens de E. Ainsi, le manchon 22 provoque l'obstruction de l'orifice 15 correspondant à l'arrivée d'eau chaude, comme illustré sur la Figure 1, et simultanément la libération de l'orifice 17 correspondant à l'arrivée d'eau froide.

Inversement, lorsque l'eau qui circule dans le corps principal présente une énergie thermique trop faible, l'organe 24 se rétracte de sorte qu'il libère en translation les moyens 28 formant butée, et le manchon est entraîné en translation dans le sens opposé à E grâce à des moyens de rappel constitués d'un ressort hélicoïdal 32.

Ainsi, on comprend que le mitigeur est susceptible de réguler la température de l'eau s'écoulant de la sortie 30 en modulant les débits d'eau chaude et d'eau froide qu'il reçoit de façon inverse l'un de l'autre, puisque lorsque l'orifice de l'une des deux arrivées d'eau tend à être obstrué, l'autre orifice tend à être libéré sensiblement de la même valeur.

Un problème qui se pose et que vise à résoudre la présente invention est d'augmenter les débits d'eau chaude et d'eau froide à travers le mitigeur sans pour autant augmenter la taille des éléments qui le constituent.

En particulier, une limitation du débit d'eau chaude ou d'eau froide réside dans la taille des orifices 15 et 17 dont la section d'écoulement qu'ils permettent est relativement faible au regard des flux F1 et F2 des sections droites S1 et S2. La taille des orifices 15 et 17 est non seulement limitée par les portions de disque 18 et 20 mais elle est susceptible d'être limitée aussi par la section droite circulaire des corps tubulaires.

Ainsi, les jonctions entre les corps tubulaires 12, 14 et le corps principal 10 présentent une portion évasée permettant de joindre les bords des orifices 15 et 17 s'étendant au-delà de la projection de la section des corps tubulaires 12, 14 sur le corps principal 10.

L'orifice 17 correspondant à l'arrivée d'eau froide est représenté de face sur la Figure 6 et de dessus sur la Figure 2. Comme l'illustre la Figure 2, la largeur L de l'orifice 17 est supérieure à la largeur l de la projection de la section droite du corps tubulaire 14 sur le corps principal 10 et la jonction entre le corps tubulaire14 et ledit corps principal 10 présente une portion évasée 34 de chaque côté du corps tubulaire 14, vers le corps principal 10, de façon à joindre le bord de l'orifice 17.

On retrouve sur la Figure 1, la portion évasée 34 de la jonction entre le corps tubulaire 14 et le corps principal 10, vu de l'extérieur du mitigeur. Comme indiqué ci-dessus, le corps principal 10 et les corps tubulaires 12, 14, sont ; de préférence, moulés ensemble d'une seule pièce par matriçage avec les portions évasées. Cependant, il est possible de mouler extérieurement les portions évasées mais, compte tenu de la géométrie de la pièce, il est impossible de mouler l'intérieur. Ainsi, les portions évasées sont, après moulage, pleines et elles sont usinées ensuite. Avantageusement, on prévoit des portions évasées de symétrie cylindrique, comme illustré sur la Figure 1, et on usine selon l'axe du corps principal et à l'intérieur, au moyen d'une fraise cylindrique la partie interne desdites portions évasées. On comprend que les quatre portions évasées du mitigeur représenté sur la Figure 1, sont susceptibles d'être usinées en une seule fois par le déplacement latéral de la fraise par rapport au corps principal. On comprend que tout en bénéficiant des avantages liés au matriçage on obtient une amélioration très sensible du débit de liquide.

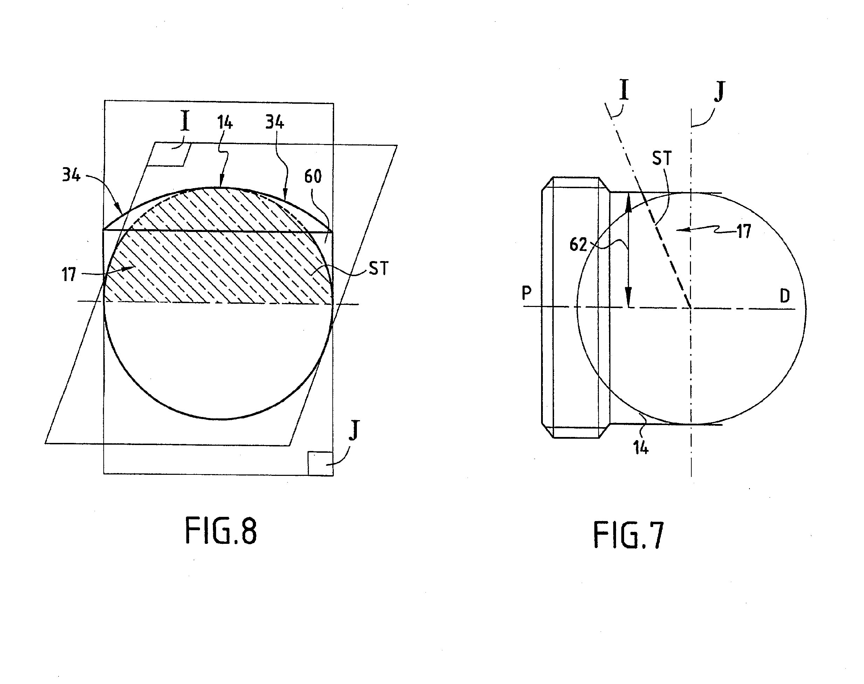

Les Figures 7 et 8, montrent schématiquement les détails de la jonction entre le corps tubulaire 14 et le corps principal 10, et en particulier l'orifice 17 ménagé dans le corps principal qui est de section 60 sensiblement rectangle et les portions évasées 34 qui relient ensemble le bord de l'orifice 17 et le corps tubulaire 14.

Ainsi, on comprend que la section ST de corps tubulaire 14 correspondant à l'intersection du corps tubulaire 14 et de la portion évasée 34, que l'on retrouve sur la Figure 8, définit un plan moyen incliné l par rapport à un plan J perpendiculaire à D et contenant la section 60 de l'orifice 17. C'est bien évidemment à travers cette section ST que le fluide va s'écouler, et ses dimensions sont supérieures aux dimensions d'une section droite 62 de la portion de corps tubulaire correspondant.

De la sorte, non seulement les dimensions de l'orifice 17 sont augmentées, puisque l'orifice 17 correspond sensiblement à la projection de la portion supérieure d'un carré circonscrit au corps tubulaire 14, mais aussi la section d'écoulement est également augmentée puisqu'elle est définie par la section ST, inclinée par rapport à la section droite 62 de la portion de corps tubulaire correspondante.

Bien évidemment, le corps tubulaire 12 et le corps principal 10 sont reliés ensemble de la même façon, de sorte que l'orifice 15 présente des dimensions supérieures à celles qui sont obtenues avec une jonction directe de l'organe tubulaire sur le corps principal pour lesquelles l'orifice ne peut s'étendre au-delà de la projection de la section droite du corps tubulaire sur le corps principal.

En outre, comme l'illustrent les Figures 2 et 3, les orifices 15 et 17 débouchent de chaque côté respectivement dans les chemins de passage circulaires 42 et 40 sans point anguleux particulier grâce à la présence des jonctions évasées, ce qui diminue considérablement les pertes de charge. Ainsi, l'eau froide s'écoule directement entre le bord supérieur 44 du manchon 22 et la paroi interne supérieure 46 de la portion évasée 34 ou, après s'être écoulée dans le chemin de passage 40, entre la paroi interne supérieure du corps principal et le bord supérieur 44 du manchon 22, sans turbulence.

De la même manière, l'eau chaude est susceptible de s'écouler directement entre le bord inférieur 48 du manchon 22 et la paroi inférieure 49 d'une portion évasée 50, non représentée sur la Figure 1 mais illustrée sur la Figure 3, ou est susceptible de s'écouler dans le chemin de passage 42 puis sous le bord inférieur 48 du manchon 22.

On comprend au vu de la Figure 4 que le manchon est formé d'une partie annulaire 52 apte à obstruer les orifices 15 et 17, cette partie annulaire 52 étant reliée en étoile par des lamelles verticales 54 à une partie 56 susceptible de recevoir l'organe thermiquement déformable 24. De la sorte, lorsque le bord inférieur 48 du manchon est espacé de la paroi inférieure 49, l'eau s'écoule sous le bord inférieur 48 et entre les lamelles 54. On retrouve, sur la Figure 1, une lamelle 54 reliant la partie annulaire du manchon 22 à la partie 56.

Selon un mode de réalisation de l'invention non représenté, les corps tubulaire sont reliés au corps principal de façon que leurs axes forment un angle de 90°. Ainsi, le mitigeur est susceptible d'être adapté sur une installation dans laquelle les arrivées d'eau chaude et d'eau froide convergent l'une vers l'autre en formant un angle de 90°. Bien évidemment, aucune autre caractéristique de l'invention n'est modifiée.

Avantageusement, le mitigeur objet de l'invention comporte des moyens de réglage 70 permettant de régler la température de sortie du mélange de fluide chaud et froid.

Ces moyens de réglage 70 comprennent des moyens de vissage 72 permettant d'entraîner en translation une pièce d'appui 74 par l'intermédiaire d'un ressort hélicoïdal 75 disposé entre les moyens de vissage et la pièce d'appui 74. La pièce d'appui 74 est susceptible d'exercer une pression longitudinale sur l'organe 24 thermiquement déformable. Ainsi, ledit organe 24 est susceptible d'être plus ou moins précontraint, de sorte que son expansion ou sa contraction en fonction de la température en est modifiée. De la sorte, les moyens de vissage peuvent être ajustés pour réguler la température du fluide de sortie.

En outre, selon un autre objet, la présente invention concerne une installation de production d'eau chaude comprenant au moins un mitigeur objet de l'invention. Ledit mitigeur permet de distribuer l'eau chaude à une température choisie constante et d'éviter qu'une grande quantité d'eau chaude provenant directement d'un chauffe-eau à une température maximale ne circule dans les conduites. De la sorte, des économies importantes d'énergie sont susceptibles d'être réalisées.

## Revendications

1. Mitigeur thermostatique permettant de fournir un fluide à une température régulée à partir d'un fluide froid et d'un fluide chaud, ledit mitigeur comprenant un corps principal longitudinal d'axe D, une entrée de fluide chaud, une entrée de fluide froid et une sortie, lesdites entrées étant formées par deux corps tubulaires débouchant dans ledit corps principal à travers deux orifices distincts, une portion de la section desdits corps tubulaires étant obturée par la paroi dudit corps principal,
**caractérisé en ce que** le bord de chaque orifice (15, 17) s'étend au-delà de la projection de la section droite (S1, S2) desdits corps tubulaires (12, 14) sur ledit corps principal (10) selon l'axe D desdits corps tubulaires (12, 14),
et **en ce que** la jonction entre lesdits corps tubulaires (12, 14) et ledit corps principal (10) présente au moins une portion allant en évasant (34), du corps tubulaire (12, 14) vers ledit corps principal (10), de façon à joindre les bords desdits orifices (15, 17) à la partie courante desdits corps tubulaires par quoi on augmente la section d'écoulement des fluides et/ou on diminue les pertes de charges desdits fluides, la pression dudit fluide régulé à ladite sortie (30) étant augmentée par rapport à celle qui serait obtenue sans lesdites portions évasées.

2. Mitigeur thermostatique selon la revendication 1, **caractérisé en ce que** lesdits orifices distincts (15, 17) et les portions évasées (34) s'étendent sensiblement perpendiculairement audit corps principal (10) de part et d'autre des corps tubulaires (12,14).

3. Mitigeur thermostatique selon la revendication 1 ou 2, **caractérisé en ce que** la surface de ladite portion évasée (34) forme une portion sensiblement cylindrique, l'axe dudit cylindre correspondant étant orienté sensiblement parallèlement audit corps principal (10).

4. Mitigeur thermostatique selon l'une quelconque des revendications 1 à 3, **caractérisé en ce que** lesdits deux orifices distincts (15, 17) sont situés de part et d'autre d'un plan perpendiculaire P audit corps principal (10), les deux portions évasées (34) des jonctions entre lesdits deux corps tubulaires (12, 14) et ledit corps principal (10) étant respectivement situées de part et d'autre dudit plan perpendiculaire P.

5. Mitigeur thermostatique selon l'une quelconque des revendications 1 à 4, **caractérisé en ce que** les deux corps tubulaires (12, 14) présentent un axe D situé dans un même plan perpendiculaire P audit corps principal (10) de façon que le fluide froid et le fluide chaud soient mélangés ensemble dans l'espace dudit corps principal (10) situé entre les deux corps tubulaires (12, 14).

6. Mitigeur thermostatique selon la revendication 5, **caractérisé en ce qu'**il comprend un manchon (22) disposé dans ledit corps principal (10) et susceptible d'obstruer alternativement lesdits orifices (15, 17) en fonction de la dilatation thermique d'un organe (24) sur lequel il s'appuie, et **en ce que** ledit organe (24) est disposé dans ledit corps principal (10) espacé dudit espace situé entre les deux corps tubulaires (12, 14), pour qu'il soit susceptible de se dilater sous l'action d'un fluide dont la température est sensiblement homogène.

7. Mitigeur thermostatique selon la revendication 6, **caractérisé en ce que** ledit organe (24) s'appuie directement sur ledit manchon (22) de façon à l'entraîner en translation lorsqu'il se dilate pour qu'il obstrue ledit orifice (15) correspondant à l'arrivée du fluide chaud, par quoi la vitesse de réaction dudit mitigeur est accrue lorsque la température du fluide qui s'écoule de ladite sortie (30) est supérieure à un seuil déterminé.

8. Mitigeur thermostatique selon l'une quelconque des revendications 5 à 7, **caractérisé en ce que** les deux axes desdits deux corps tubulaires (12, 14) forment sensiblement un angle de 180° entre eux, lesdits fluides étant dirigés l'un vers l'autre.

9. Mitigeur thermostatique selon l'une quelconque des revendications 5 à 7, **caractérisé en ce que** les deux axes desdits deux corps tubulaires (12, 14) forment sensiblement un angle de 90° entre eux.

10. Mitigeur thermostatique selon l'une quelconque des revendications 1 à 9, **caractérisé en ce qu'**il comprend des moyens de réglage (70) permettant de régler la température du fluide régulé.

11. Installation de production d'eau chaude de type chauffe-eau, **caractérisée en ce qu'**elle comprend un mitigeur thermostatique selon l'une quelconque des revendications 1 à 10.
